# EUROPEAN PATENT SPECIFICATION

(11) **EP 2 830 343 B1**
(45) Date of publication and mention of the grant of the patent: **30.05.2018**
(21) Application number: 13306063.2
(22) Date of filing: 23.07.2013
(51) Int. Cl.: H04W 16/14, H04W 64/00, H04W 72/04, H04W 84/04

(54) **Vehicle, data base, apparatus, method, and computer program for setting a radio resource**
Fahrzeug, Datenbank, Vorrichtung, Verfahren und Computerprogramm zur Einstellung einer Funkressource
Véhicule, base de données, appareil, procédé et programme informatique pour régler une ressource radio

(43) Date of publication of application: 28.01.2015
(73) Proprietor: Alcatel Lucent, 91620 Nozay (FR); Bayerische Motoren Werke Aktiengesellschaft, 80809 München (DE)
(72) Inventor: Möhlmann, Ulrich, 70435 Stuttgart (DE); Dr. Fertl, Peter, 80799 München (DE); Ritzenhoff, Rainer, 70435 Stuttgart (DE); Günster, Franz Josef, 70435 Stuttgart (DE); Gerlach, Frank, 70435 Stuttgart (DE); Wabner, Markus, 70435 Stuttgart (DE)
(74) Representative: 2SPL Patentanwälte PartG mbB

(56) References cited:
- EP-A1- 1 298 847
- WO-A1-2012/096605
- SE-C2- 519 389

## Description

Embodiments of the present invention relate to communication networks, more particularly but not exclusively to setting or selection of radio resources for communicating in different networks.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing. Moreover, the number of networks for voice and data access is also increasing, therewith roaming options between these networks become available when multiple network layers overlap or at network boundaries, respectively.

Today's network planning and deployment in cellular communication systems is based on fixed, stationary base stations. However, the cellular radio coverage inside of vehicles, e.g. cars, buses, trains, ships, planes, etc., is subject to changing Radio Frequency (RF) conditions and penetration losses due to the vehicles' body. For this reason, customers, who use their Consumer Electronics (CE) devices, e.g. smartphone, tablet, computer, inside vehicles to consume mobile broadband data or voice services, may perceive a severe Quality-of-Service (QoS) degradation.

WO2012/096605 relates to the configuration of relay nodes in wireless communication networks, and more particularly to techniques for the reporting of relay node capabilities, including capabilities for supporting multiple frequency bands, in these networks.

SE 519 389 discloses a mobile repeater which determines some operational settings according to its location.

### Summary

Embodiments are based on the finding that a relay node can be used to improve the cellular coverage in the vehicle and to connect multiple terminals inside of a vehicle. An aggregated connection to a stationary cellular communication system can be provided via a wireless backhaul link, for example, using an external vehicle antenna. In the following the link between a stationary base station and an external antenna of a vehicle relay node will be denoted as relay link; the link between a relay node and end user terminals will be denoted as access link.

Such a relay node may, for example, correspond to a relay as defined in 3^{rd} Generation Partnership Project (3GPP) Release 10, a moving relay as currently discussed in 3GPP Release 12 study groups and in current research literature, a wireless repeater (analog or digital), or a femto cell with a wireless backhaul connection. In case of a femto cell, the wireless backhaul connection could be provided over a separate cellular communication terminal, e.g., a 2G/3G/4G modem. It is another finding that for the relay link and for the access link, respectively, the same or different frequency and spectrum resources can be used.

According to another finding the frequency spectrum used for the relay and access link cannot be chosen freely, since frequency resources are a dedicated resource which are regulated by a national frequency spectrum regulators and usually licensed by a network operator. Since specific requirements for spectrum regulation and use apply in each country, or sometimes even for specific geographical areas within a country, and since in each country different network operators have licensed different frequency resources, the frequency and spectrum resource of one country may not be used in a different country without specific agreements between the operators. For conventional terminal communication links this means that operators of different countries may have some kind of roaming agreement, in order to allow a foreign terminal to get access to the national cellular network.

It is another finding that a vehicular relay node may not use frequency resources of the access link that are used in one specific country within another visited country. Therefore, the vehicle relay node may need to be turned off when crossing the country border. Embodiments provide an apparatus for setting or operable to set a radio resource of a mobile relay transceiver in a mobile communication system. In other words, the apparatus may be adapted to or operable in a mobile or vehicular relay transceiver; it may be operated or comprised in a mobile or vehicular relay transceiver. The apparatus is therefore also referred to as relay apparatus. Embodiments also provide a mobile relay transceiver comprising such a relay apparatus.

The relay transceiver is operable to relay information between a mobile transceiver associated with the relay transceiver and a base station transceiver of the mobile communication system. The mobile communication system may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

In embodiments the relay apparatus comprises a determination module operable to determine an access radio resource for communicating with the mobile transceiver based on information related to a location of the relay transceiver. In embodiments the determination module can be implemented as any means for determining, such as one or more determination devices, one or more determination units, etc. In some embodiments the determination module may be implemented in software or as a computer program which can be executed on accordingly adapted hardware, such as a processor, a Digital Signal Processor (DSP), a multi-purpose processor, etc. The access radio resource may correspond to any radio resource such as a frequency resource, e.g. in terms of one or more carrier or subcarrier frequencies with an according bandwidth, etc., a time resource, such as one or more, slots, frames, sub-frames, symbols, a code resource, as e.g. one or more scrambling codes, channelization codes, interleaving codes, etc. In some embodiments, the information related to the location of the relay transceiver may correspond to a geographical coordination of the relay transceiver. In some embodiments the information related to the location of the relay transceiver may correspond to a location of a base station transceiver the relay transceiver is receiving radio signals from.

In some embodiments the determination module may be operable to determine the information related to the location of the relay transceiver based on information on an identification of the mobile communication system the relay transceiver is associated with or based on a country the relay transceiver is located in. For example, the mobile communication system may communicate signals through one or more base station transceivers, such as so-called common signals, which comprise identification information for the communication system. Such information may, for example, correspond to a Public Land Mobile Network - IDentification (PLMN-ID) and it may be a subset of system information broadcast in the mobile communication system. Hence, the determination module may be operable to determine a carrier frequency or a frequency spectrum as the access radio resource. This determination may be based on the identification of the mobile communication system. This way, embodiments may adapt the access resources at borders of countries, regions, or communication systems and may provide the advantage that through the adaptation service continuity can be provided across borders by the relay transceiver.

In further embodiments, the relay apparatus may comprise a first communication module operable to communicate radio signals with the mobile transceiver using the access radio resource and it may comprise a second communication module operable to communicate with the base station transceiver using a relay radio resource. That is to say, the relay apparatus may comprise separate communication devices, units, or means for communicating with the mobile transceiver and the base station transceiver. In embodiments a communication module may comprise typical transceiver, i.e. transmitter and receiver components. Such components may comprise one or more transmit and/or receive antennas, a low Noise Amplifier (LNA), a Power Amplifier (PA), one or more filters, a converter, a mixer, a duplexer, a diplexer etc. In it to be noted that some of these components may as well be shared between the first and the second communication modules. Moreover, different radio resources may be used for communicating with the mobile transceiver and the base station transceiver, respectively.

In some embodiments, the same time and frequency resources but different spatial resources may be used for the access and the relay link, such as, for example, different antennas, where one antenna may be used to cover the inside of a vehicle and another antenna may be used to communicate outside of the vehicle. In some embodiments different beams of a beamforming antenna may be used, for example, one beam may be used to cover the inside of a vehicle via the access link, while another beam may be used to communicate with the base station transceiver using the relay link. Such embodiments may allow for a relatively high reuse or share of components of the first and second communication modules. In further embodiments, different time or frequency resources may be used for the relay and the access link. These embodiments may provide the advantage that additionally or alternatively access link and relay link may be orthogonalized in the time or frequency domain. This may provide an advantage with respect to the mutual interference creation between the access and the relay links.

The determination module may be operable to determine the information related to the location of the relay transceiver by determining information related to the relay radio resource from the second communication module. In other words, as the second communication module uses certain radio resources for communicating with the communication network itself, information on these resources may also allow for concluding on the location of the relay transceiver, as these resources may be used in certain pre-known regions or networks. In some embodiments information from network planning or a network layout may hence be used to conclude from resources used on the relay link on resources used on the access link. Such embodiments may provide the advantage that an easy implementation may result, as the resource on the relay link may be used to obtain a mapping table or a data base.

In some embodiments the relay apparatus may further comprise an interface operable to receive the information related to the location of the relay transceiver. Such information may be based on the information on which resource is used on the relay link. In other embodiments the location information may be received from a location module, which can be comprised in other components of the vehicle, such as a navigation system, a satellite navigation module, a Global Positioning System (GPS) module, a triangulation module, etc. Embodiments may therewith provide efficiency advantages as components of other system may be reused. In further embodiments the relay apparatus further comprises such a location module which is operable to determine the information related to the location of the relay transceiver and which is operable to provide the information to the interface. Hence, the location information may then be obtained from the location module through the interface. Such embodiments may provide the advantage that the relay apparatus may determine the location information independently from other components.

In further embodiments the determination module may be operable to communicate with a database to determine the access radio resource for communicating with the mobile transceiver based on a location of the relay transceiver. Hence, in embodiments there may be a data base or a mapping table comprising the information on which access resource can be used at which location. In some embodiments the relay apparatus comprises the data base. In other embodiments the data base may be external to the relay apparatus, which may then use the interface or a communication module to obtain the respective information from the data base.

Embodiment may also provide a database. The data base comprises information relating an access radio resource for the relay transceiver to a location of the relay transceiver. The relay transceiver is operable to communicate with the mobile transceiver using the access radio resource. Embodiments may further provide a vehicle which comprises a relay transceiver with the relay apparatus. In some further embodiments the vehicle may further comprise a location module for determining information related to the location of the vehicle and the relay apparatus is operable to use the information related to the location of the vehicle as the information on the location of the relay transceiver. Hence, in some embodiments multiple components of the vehicle may cooperate as a system. The vehicle may further comprise the database.

Embodiments further provide a method for setting a radio resource of a mobile relay transceiver in a mobile communication system. The relay transceiver is operable to relay information between a mobile transceiver associated with the relay station and a base station transceiver of the mobile communication system. The method comprises determining an access radio resource for communicating with the mobile transceiver based on information related to a location of the relay transceiver.

Embodiments further provide a computer program having a program code for performing one or more of the above described methods, when the computer program is executed on a computer or processor.

Embodiments may provide a vehicle relay node which can provide excellent and continuous radio coverage for terminals or mobile transceivers inside the vehicle across different geographical areas, e.g., countries or networks. Usually, specific frequency resources are linked to certain geographical areas due to national frequency regulations. That is to say embodiments may enable the vehicle relay node to be or to stay turned on when approaching a new geographical area and therewith enable service continuity instead of switching off the relay resulting in no service to be available anymore at all.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates an embodiment of an apparatus for setting a radio resource;
Fig. 2 shows an embodiment in a vehicle in a communication network;
Fig. 3 shows an embodiment in which a relay transceiver crosses a border between two networks;
Fig. 4 shows a block diagram of a flow chart of an embodiment of a method for setting a radio resource; and
Fig. 5 shows a block diagram of a flow chart of another embodiment of a method for setting a radio resource.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

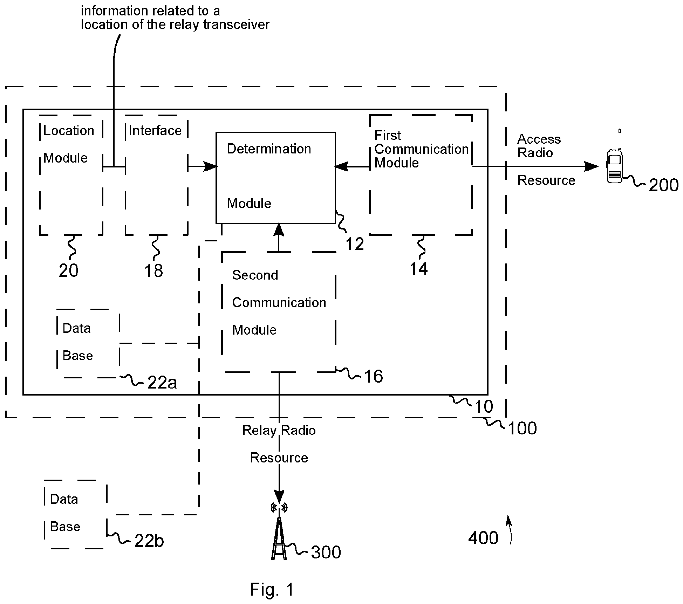

Optional components in the following figures are shown using dashed or dotted lines. Fig. 1 illustrates an embodiment of an apparatus 10 for setting a radio resource of a mobile relay transceiver 100 in a mobile communication system 400. The relay transceiver 100 corresponds to a femto cell inside a vehicle. The mobile communication system depicted in Fig.1 comprises at least the mobile relay station 100, the mobile transceiver 200 and a base station transceiver 300. Embodiments may comprise a plurality of either one of these components. Furthermore, the relay transceiver 100 is operable to relay information between the mobile transceiver 200 associated with the relay transceiver 100 and the base station transceiver 300 of the mobile communication system 400. The relay apparatus 10 further comprises a determination module 12 which is operable to determine an access radio resource for communicating with the mobile transceiver 200 based on information related to a location of the relay transceiver 100. Fig. 1 further illustrates optional components of the relay apparatus 10, namely, first and second communication modules 14 and 16, which are coupled to the determination module 112. Further optional components are an interface 18, which can be coupled to the determination module 12 and a location module 20, which can be coupled to the interface module 18. An optional data base 22 is displayed in two possible positions in Fig. 1, inside the relay apparatus 10 as data base 22a and outside of the relay apparatus as data base 22b. The optional components will be further described subsequently.

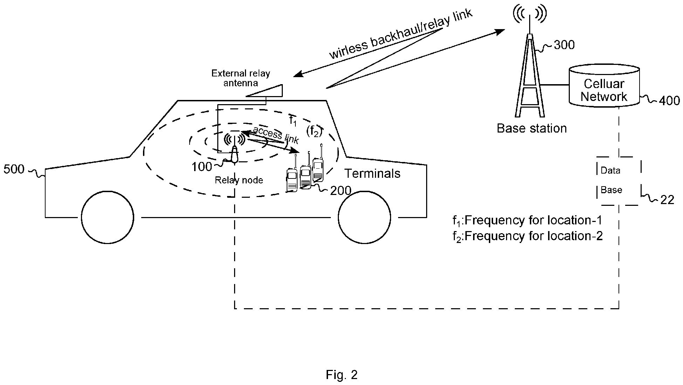

The following embodiments provide further methods and apparatuses 10 to update used carrier frequency and frequency spectrum of the access link of the vehicle relay node 100 when approaching a certain geographical area, which is further illustrated in Fig. 2. Fig. 2 illustrates an embodiment of a vehicle 500, which is shown as an exemplified car, and which comprises a relay transceiver 100 with the apparatus 10 as shown in Fig. 1. The relay transceiver 100 is denoted as relay node 100 in Fig. 2. Fig. 2 shows a plurality of mobile transceivers 200, which communicate with the relay station 100 inside the vehicle 500 via the access link. The relay node 100 further comprises a relay antenna which is external to the vehicle 500 and which is used to communicate with the base station 300 via a relay link to which it is also referred to as wireless backhaul. In the following embodiment the relay apparatus 10 comprises a first communication module 14 operable to communicate radio signals with the mobile transceiver 200 using the access radio resource and it comprises a second communication module 16 operable to communicate with the base station transceiver 300 using a relay radio resource as depicted in Fig. 1 .

The base station 300 is part of a cellular network 400, which is assumed to be an LTE or LTE-A network in the present embodiment. Fig. 2 also depicts a data base 22, for which the dashed connections show that it may either be coupled to the cellular network 400 or it may be coupled to the relay transceiver 100, the relay apparatus 10 therein, respectively. Hence, the data base 22 may as well be located in the vehicle or even be part of the relay apparatus 10. In the present embodiment the determination module 12 is operable to determine a carrier frequency or a frequency spectrum as the access radio resource. The frequency resource used for the access link is referred to f₁ in Fig. 2 and it is assumed that the vehicle changes its location from location 1 to location 2, where the frequency resource is changed from f₁ to f₂ when changing from location 1 to location 2.

In an embodiment the determination module 12 is operable to determine the information related to the location of the relay transceiver 100 based on information on an identification of the mobile communication system 400 the relay transceiver 100 is associated with, i.e. from the identification of the cellular network 400. That is to say that the information related to the location of the relay transceiver 100 can be derived from a sniffed Public Land Mobile Network IDentifier (PLMN-ID) of the serving cellular macro network 400. Moreover, the determination module 12 can be operable to determine the information related to the location of the relay transceiver 100 by determining information related to the relay radio resource from the second communication module 16, i.e. a certain resource or frequency used or being assign by the network 400, may already indicate that the region or location was changed. The latter can, for example, be obtained from analyzing the corresponding relay link that provides the connection to the serving base station 300.

In another embodiment the information related to the location of the relay transceiver is based on a country or region the relay transceiver 100 is located in. In other words, when approaching a new geographical area, e.g., when crossing the home country border, a trigger signal can be activated, which initiates a data base 22 table look-up and a corresponding reconfiguration of the serving frequency spectrum of the access link of the vehicle relay node 200.

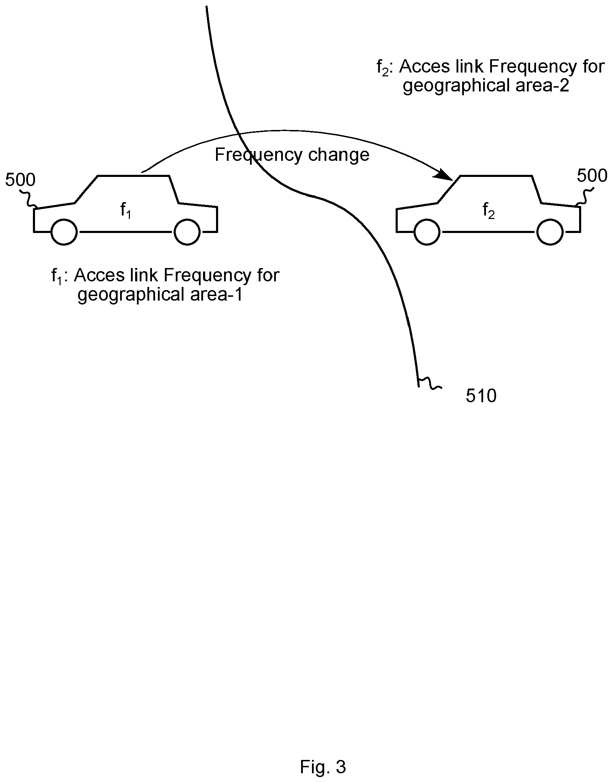

This is further illustrated in Fig. 3. Fig. 3 shows an embodiment in which the vehicle 500, as detailed in Fig. 2, crosses a border line 510 and the access frequency is changed from f₁ for geographical area 1, depicted on the left of the border line 510, to access link frequency f₂ for geographical area 2, depicted on the right of border line 510. The geographical areas can, for example, be represented by a whole country or by a specific geographical area within a country. As an example: If the geographical area represents a whole country, the carrier frequency and frequency resources of the access link can be switched to a different carrier frequency and frequency resources when crossing the home country border and entering a visiting country, or alternatively when leaving the home country. In a further embodiment, the trigger signal can, for example, be derived from GPS-data, e.g. provided from an in-vehicle navigation system in combination with a digital map. In this embodiment the relay apparatus 10 as shown in Fig. 1, may further comprise an interface 18 operable to receive the information related to the location of the relay transceiver 100, from a location module in a navigation system. In other words, the vehicle 500 may comprise a location module 20 for determining information related to the location of the vehicle 500. The relay apparatus 10 is operable to use the information related to the location of the vehicle 500 as the information on the location of the relay transceiver 100. In a further embodiment the relay apparatus 10 further comprises a location module 20 operable to determine the information related to the location of the relay transceiver 100 and operable to provide the information to the interface 18, as shown in Fig. 1.

In another embodiment the data base 22 look-up table contains information of some or all the supported frequency spectra and carrier frequencies that are eligible for the access link of the vehicle relay node 100 in a certain geographical area. The determination module 12 is then operable to communicate with the database 22 to determine the access radio resource for communicating with the mobile transceiver 200 based on a location of the relay transceiver 100. The data base 22 can be stored locally in the vehicle relay node 100 or remotely, e.g. in an off-board management server. In some embodiments the relay apparatus 10 comprises the data base 22, as exemplified in the embodiment of Fig. 1 by data base 22a. The database 22, 22a, 22b comprises information relating the access radio resource for the relay transceiver 100 to a location of the relay transceiver 100. The relay transceiver 100 is operable to communicate with the mobile transceiver 200 using the access radio resource. In some embodiments the vehicle 500 further comprises the database 22.

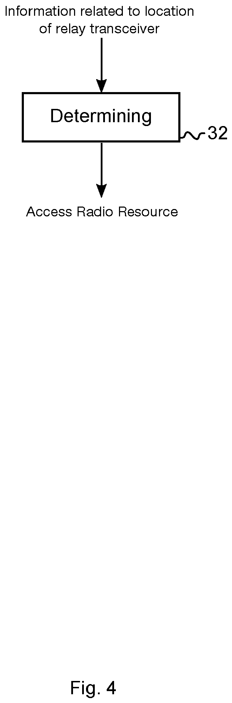

Fig. 4 illustrates a block diagram of a flow chart of an embodiment of a method for setting a radio resource of the mobile relay transceiver 100 in the mobile communication system 400. The relay transceiver 100 is operable to relay information between the mobile transceiver 200 associated with the relay station 100 and the base station transceiver 300 of the mobile communication system 400. The method comprises determining 32 an access radio resource for communicating with the mobile transceiver 200 based on information related to the location of the relay transceiver 100.

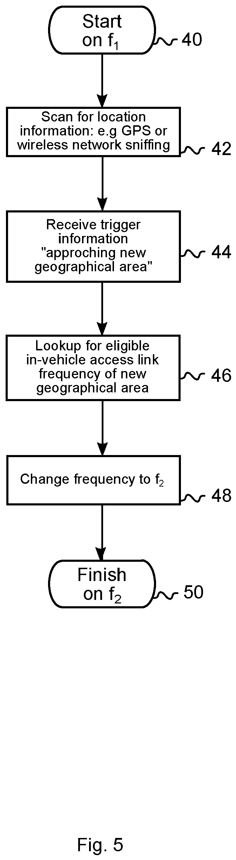

Fig. 5 further illustrates a block diagram of another embodiment of a method for setting the radio resource. In the present embodiment the frequency for the access link is changed from frequency f₁ to frequency f₂ while relay transceiver 100 moves to a new geographical area. Fig. 5 shows a starting point 40 at which the relay apparatus 10 uses frequency f₁ for the access link. The relay apparatus 10 then scans for location information, using, e.g. GPS, wireless network sniffing, a location module, etc. as shown by action 42 in Fig. 5. Furthermore, trigger information is received in an action 44, which comprises information that a new geographical area is approached, such as when crossing the border between two countries. A look-up action 46 is performed for eligible in-vehicle access link frequency of the new geographical area. A change-action 48 is performed to change to frequency f₂ as obtained from the look-up action 46. The method is then completed with action 50. Embodiments may further provide a computer readable storage medium storing instructions which, when executed by a computer, cause the computer to implement one of the methods described herein. Embodiments further provide computer programs or computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for determining", "means for communicating", etc., may be provided through the use of dedicated hardware, such as "a determiner", "a communicator", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for setting a radio resource of a mobile relay transceiver (100) in a mobile communication system (400), the relay transceiver (100) being operable to relay information between a mobile transceiver (200) associated with the relay transceiver (100) and a base station transceiver (300) of the mobile communication system (400), the apparatus (10) comprising
a determination module (12) operable to determine, based on information related to a location of the relay transceiver (100), an access radio resource for communicating with the mobile transceiver (200),
a first communication module (14) operable to communicate radio signals with the mobile transceiver (200) using the access radio resource: and
a second communication module (16) operable to communicate with the base station transceiver (300) using a relay radio resource, wherein the access radio resource and the relay radio resource are different,
wherein the determination module (12) is operable to determine the information related to the location of the relay transceiver (100) based on information on an identification of the mobile communication system (400) the relay transceiver (100) is associated with or based on a country the relay transceiver (100) is located in. wherein the determination module (12) is operable to determine the information related to the location of the relay transceiver (100) by determining information related to the relay radio resource from the second communication module (16).

2. The apparatus (10) of claim 1, wherein the determination module (12) is operable to determine a carrier frequency or a frequency spectrum as the access radio resource.

3. The apparatus (10) of claim 1, wherein the mobile relay transceiver (100) corresponds to a femto cell.

4. The apparatus (10) of claim 1, further comprising an interface (18) operable to receive the information related to the location of the relay transceiver (100).

5. The apparatus (10) of claim 4, further comprising a location module (20) operable to determine the information related to the location of the relay transceiver (100) and operable to provide the information to the interface (18).

6. The apparatus (10) of claim 1, wherein the determination module (12) is operable to communicate with a database (22) to determine the access radio resource for communicating with the mobile transceiver (200) based on a location of the relay transceiver (100).

7. The apparatus (10) of claim 6, comprising the data base (22).

8. A car (500) comprising a relay transceiver (100) with the apparatus (10) of claim 1.

9. The car (500) of claim 8, further comprising a location module (20) for determining information related to the location of the vehicle (500), wherein the apparatus (10) is operable to use the information related to the location of the vehicle (500) as the information on the location of the relay transceiver (100).

10. The car (500) of claim 9, further comprising a database (22), the data base (22) comprising information relating an access radio resource for a relay transceiver (100) to a location of the relay transceiver (100), the relay transceiver (100) being operable to communicate with a mobile transceiver (200) using the access radio resource.

11. A method for setting a radio resource of a mobile relay transceiver (100) in a mobile communication system (400), the relay transceiver (100) being operable to relay information between a mobile transceiver (200) associated with the relay station (100) and a base station transceiver (300) of the mobile communication system (400), the method being performed by the mobile relay transceiver (100), the mobile relay transceiver (100) comprising a determination module (12), a first communication module (14), and a second communication module (16), the method comprising
determining (32), by the determination module (12), based on information related to a location of the relay transceiver (100), an access radio resource for communicating with the mobile transceiver (200) and determining the information related to the location of the relay transceiver (100) based on information on an identification of the mobile communication system (400) the relay transceiver (100) is associated with or based on a country the relay transceiver (100) is located in:
communicating, by the first communication module (14), radio signals with the mobile transceiver (200) using the access radio resource: and
communicating, by the second communication module (16), with the base station transceiver (300) using a relay radio resource, wherein the access radio resource and the relay radio resource are different, and wherein the determining, by the determination module (12), of the information related to the location of the relay transceiver (100) comprises determining information related to the relay radio resource from the second communication module (16).

12. A computer program having a program code for performing the method of claim 11, when the computer program is executed on a computer or processor.

## Patentansprüche

1. Eine Vorrichtung (10) zum Einstellen einer Funkressource eines mobilen Relais-Sendeempfängers (100) in einem Mobilkommunikationssystem (400), wobei der Relais-Sendeempfänger (100) wirksam ist, um Informationen zwischen einem mobilen Sendeempfänger (200), der dem Relais-Sendeempfänger (100) zugeordnet ist, und einem Basisstation-Sendeempfänger (300) des Mobilkommunikationssystems (400) zu übertragen, die Vorrichtung (10) umfassend
ein Bestimmungsmodul (12), das wirksam ist, um basierend auf den Informationen bezogen auf einen Ort des Relais-Sendeempfängers (100) eine Zugriffs-Funkressource zum Kommunizieren mit dem mobilen Sendeempfänger (200) zu bestimmen,
ein erstes Kommunikationsmodul (14), das wirksam ist, um Funksignale mit dem mobilen Sendeempfänger (200) unter Verwendung der Zugriffs-Funkressource zu kommunizieren; und
ein zweites Kommunikationsmodul (16), das wirksam ist, um mit dem Basisstation-Sendeempfänger (300) unter Verwendung einer Relais-Funkressource zu kommunizieren, wobei die Zugriffs-Funkressource und die Relais-Funkressource unterschiedlich sind, wobei das Bestimmungsmodul wirksam ist, um die Informationen bezogen auf den Ort des Relais-Sendeempfängers (100) basierend auf Informationen über eine Identifikation des Mobilkommunikationssystems (400) zu bestimmen, dem der Relais-Sendeempfänger (100) zugeordnet ist, oder basierend auf einem Land, in dem der Relais-Sendeempfänger (100) angeordnet ist, wobei das Bestimmungsmodul (12) wirksam ist, um die Informationen bezogen auf den Ort des Relais-Sendeempfängers (100) durch Bestimmen von Informationen bezogen auf die Relais-Funkressource aus dem zweiten Kommunikationsmodul (16) zu bestimmen.

2. Die Vorrichtung (10) gemäß Anspruch 1, wobei das Bestimmungsmodul (12) wirksam ist, um eine Trägerfrequenz oder ein Frequenzspektrum als die Zugriffs-Funkressource zu bestimmen.

3. Die Vorrichtung (10) gemäß Anspruch 1, wobei der mobile Relais-Sendeempfänger (100) einer Femto-Zelle entspricht.

4. Die Vorrichtung (10) gemäß Anspruch 1, ferner umfassend eine Schnittstelle (18), die wirksam ist, um die Informationen bezogen auf den Ort des Relais-Sendeempfängers (100) zu empfangen.

5. Die Vorrichtung (10) gemäß Anspruch 4, ferner umfassend ein Ortsmodul (20), das wirksam ist, um die Informationen bezogen auf den Ort des Relais-Sendeempfängers (100) zu empfangen und wirksam ist, um die Informationen an die Schnittstelle (18) bereitzustellen.

6. Die Vorrichtung (10) gemäß Anspruch 1, wobei das Bestimmungsmodul (12) wirksam ist, um mit einer Datenbank (22) zu kommunizieren, um die Zugriffs-Funkressource zum Kommunizieren mit dem mobilen Sendeempfänger (200) basierend auf einem Ort des Relais-Sendeempfängers (100) zu bestimmen.

7. Die Vorrichtung (10) gemäß Anspruch 6, umfassend die Datenbank (22).

8. Ein Fahrzeug (500) umfassend einen Relais-Sendeempfänger (100) mit der Vorrichtung (10) gemäß Anspruch 1.

9. Das Fahrzeug (500) gemäß Anspruch 8, ferner umfassend ein Ortsmodul (20) zum Bestimmen von Informationen bezogen auf den Ort des Fahrzeugs (500), wobei die Vorrichtung (10) wirksam ist, um die Informationen bezogen auf den Ort des Fahrzeugs (500) als die Informationen über den Ort des Relais-Sendeempfängers (100) zu verwenden.

10. Das Fahrzeug (500) gemäß Anspruch 9, ferner umfassend eine Datenbank (22), die Datenbank (22) umfassend Informationen bezogen auf eine Zugriffs-Funkressource für einen Relais-Sendeempfänger (100) auf einen Ort des Relais-Sendeempfängers (100), wobei der Relais-Sendeempfänger (100) wirksam ist, um mit einem mobilen Sendeempfänger (200) unter Verwendung der Zugriffs-Funkressource zu kommunizieren.

11. Ein Verfahren zum Einstellen einer Funkressource eines mobilen Relais-Sendeempfängers (100) in einem Mobilkommunikationssystem (400), wobei der Relais-Sendeempfänger (100) wirksam ist, um Informationen zwischen einem mobilen Sendeempfänger (200), der der Relais-Station (100) zugeordnet ist, und einem Basisstation-Sendeempfänger (300) des Mobilkommunikationssystems (400) zu übertragen, wobei das Verfahren ausgeführt wird durch den mobilen Relais-Sendeempfänger (100), der mobile Relais-Sendeempfänger (100) umfassend ein Bestimmungsmodul (12), ein erstes Kommunikationsmodul (14) und ein zweites Kommunikationsmodul (16), das Verfahren umfassend
Bestimmen (32), durch das Bestimmungsmodul (12), basierend auf den Informationen bezogen auf einen Ort des Relais-Sendeempfängers (100), einer Zugriffs-Funkressource zum Kommunizieren mit dem mobilen Sendeempfänger (200) und Bestimmen der Informationen, die sich auf den Ort des Relais-Sendeempfängers (100) beziehen, basierend auf Informationen über eine Identifikation des Mobilkommunikationssystems (400), dem der Relais-Sendeempfänger (100) zugeordnet ist, oder basierend auf einem Land, in dem der Relais-Sendeempfänger (100) angeordnet ist;
Kommunizieren, durch das erste Kommunikationsmodul (14), von Funksignalen mit dem mobilen Sendeempfänger (200) unter Verwendung der Zugriffs-Funkressource; und
Kommunizieren, durch das zweite Kommunikationsmodul (16), mit dem Basisstation-Sendeempfänger (300) unter Verwendung einer Relais-Funkressource, wobei die Zugriffs-Funkressource und die Relais-Funkressource unterschiedlich sind, und wobei das Bestimmen, durch das Bestimmungsmodul (12), der Informationen, die sich auf den Ort des Relais-Sendeempfängers (100) beziehen, das Bestimmen von Informationen bezogen auf die Relais-Funkressource aus dem zweiten Kommunikationsmodul (16) aufweist.

12. Ein Computerprogramm mit einem Programmcode zum Ausführen des Verfahrens gemäß Anspruch 11, wenn das Computerprogramm auf einem Computer oder Prozessor ausgeführt wird.

## Revendications

1. Appareil (10) pour régler une ressource radio d'un émetteur-récepteur de relais mobile (100) dans un système de communication mobile (400), l'émetteur-récepteur de relais (100) étant utilisable pour relayer des informations entre un émetteur-récepteur mobile (200) associé à l'émetteur-récepteur de relais (100) et un émetteur-récepteur de station de base (300) du système de communication mobile (400), l'appareil (10) comprenant :
un module de détermination (12) utilisable pour déterminer, sur la base d'informations relatives à une localisation de l'émetteur-récepteur de relais (100), une ressource radio d'accès pour communiquer avec l'émetteur-récepteur mobile (200),
un premier module de communication (14) utilisable pour communiquer des signaux radio avec l'émetteur-récepteur mobile (200) au moyen de la ressource radio d'accès ; et
un second module de communication (16) utilisable pour communiquer avec l'émetteur-récepteur de station de base (300) au moyen d'une ressource radio de relais, où la ressource radio d'accès et la ressource radio de relais sont différentes,
où le module de détermination (12) est utilisable pour déterminer les informations relatives à la localisation de l'émetteur-récepteur de relais (100) sur la base d'informations sur une identification du système de communication mobile (400) auquel l'émetteur-récepteur de relais (100) est associé ou sur la base d'un pays dans lequel se trouve l'émetteur-récepteur de relais (100), où le module de détermination (12) est utilisable pour déterminer les informations relatives à la localisation de l'émetteur-récepteur de relais (100) en déterminant des informations relatives à la ressource radio de relais à partir du second module de communication (16).

2. Appareil (10) selon la revendication 1, dans lequel le module de détermination (12) est utilisable pour déterminer une fréquence porteuse ou un spectre de fréquences comme ressource radio d'accès.

3. Appareil (10) selon la revendication 1, dans lequel l'émetteur-récepteur de relais mobile (100) correspond à une cellule femto.

4. Appareil (10) selon la revendication 1, comprenant en outre une interface (18) utilisable pour recevoir les informations relatives à la localisation de l'émetteur-récepteur de relais (100).

5. Appareil (10) selon la revendication 4, comprenant en outre un module de localisation (20) utilisable pour déterminer les informations relatives à la localisation de l'émetteur-récepteur de relais (100) et utilisable pour fournir les informations à l'interface (18).

6. Appareil (10) selon la revendication 1, dans lequel le module de détermination (12) est utilisable pour communiquer avec une base de données (22) pour déterminer la ressource radio d'accès pour communiquer avec l'émetteur-récepteur mobile (200) sur la base d'une localisation de l'émetteur-récepteur de relais (100) .

7. Appareil (10) selon la revendication 6, comprenant la base de données (22).

8. Voiture (500) comprenant un émetteur-récepteur de relais (100) avec l'appareil (10) selon la revendication 1.

9. Voiture (500) selon la revendication 8, comprenant en outre un module de localisation (20) pour déterminer des informations relatives à la localisation du véhicule (500), où l'appareil (10) est utilisable pour utiliser les informations relatives à la localisation du véhicule (500) comme informations sur la localisation de l'émetteur-récepteur de relais (100).

10. Voiture (500) selon la revendication 9, comprenant en outre une base de données (22), la base de données (22) comprenant des informations reliant une ressource radio d'accès pour émetteur-récepteur de relais (100) à une localisation de l'émetteur-récepteur de relais (100), l'émetteur-récepteur de relais (100) étant utilisable pour communiquer avec un émetteur-récepteur mobile (200) au moyen de la ressource radio d'accès.

11. Procédé de réglage d'une ressource radio d'un émetteur-récepteur de relais mobile (100) dans un système de communication mobile (400), l'émetteur-récepteur de relais (100) étant utilisable pour relayer des informations entre un émetteur-récepteur mobile (200) associé à la station de relais (100) et un émetteur-récepteur de station de base (300) du système de communication mobile (400), le procédé étant exécuté par l'émetteur-récepteur de relais mobile (100), l'émetteur-récepteur de relais mobile (100) comprenant un module de détermination (12), un premier module de communication (14) et un second module de communication (16), le procédé comprenant les étapes suivantes :
déterminer (32), par le module de détermination (12), sur la base d'informations relatives à une localisation de l'émetteur-récepteur de relais (100), une ressource radio d'accès pour communiquer avec l'émetteur-récepteur mobile (200), et déterminer les informations relatives à la localisation de l'émetteur-récepteur de relais (100) sur la base d'informations sur une identification du système de communication mobile (400) auquel l'émetteur-récepteur de relais (100) est associé ou sur la base d'un pays dans lequel se trouve l'émetteur-récepteur de relais (100) ;
communiquer, par le premier module de communication (14), des signaux radio avec l'émetteur-récepteur mobile (200) au moyen de la ressource radio d'accès ; et
communiquer, par le second module de communication (16), avec l'émetteur-récepteur de station de base (300) au moyen d'une ressource radio de relais, où la ressource radio d'accès et la ressource radio de relais sont différentes, et où la détermination, par le module de détermination (12), des informations relatives à la localisation de l'émetteur-récepteur de relais (100) comprend de déterminer des informations relatives à la ressource radio de relais à partir du second module de communication (16).

12. Programme informatique disposant d'un code de programme destiné à exécuter le procédé de la revendication 11 lorsque le programme informatique est exécuté sur un ordinateur ou un processeur.
